Europäisches Patentamt

European Patent Office

Office européen des brevets

(11) Veröffentlichungsnummer: **0 441 331 A1**

## (12) EUROPÄISCHE PATENTANMELDUNG

(21) Anmeldenummer: 91101552.7

(22) Anmeldetag: 05.02.91

(51) Int. Cl.⁵: **F16H 1/44**

(30) Priorität: 05.02.90 DE 4003331

(43) Veröffentlichungstag der Anmeldung:
14.08.91 Patentblatt 91/33

(84) Benannte Vertragsstaaten:
DE ES FR GB IT

(71) Anmelder: **Klöckner-Humboldt-Deutz
Aktiengesellschaft
Deutz-Mülheimer-Strasse 111 Postfach 80 05
09
W-5000 Köln 80(DE)**

(72) Erfinder: **Storms, Dietmar
Magnolienweg 11
W-5000 Köln 71(DE)**

(54) **Selbstsperrendes Ausgleichsgetriebe.**

(57) Die Erfindung betrifft ein Selbstsperrdifferential für Fahrzeuge, insbesondere Traktoren, das in angetriebene Lenkachsen einsetzbar ist.

Der Erfindung liegt die Aufgabe zugrunde, ein Eingriffsspiel darzustellen, das unabhängig von der Betriebsart gleich bleibt und mit dem eine Vollsperrung des Ausgleichgetriebes möglich ist.

Erfindungsgemäß wird dies dadurch gelöst, daß die Differentialeinheit 30 in einem Gehäuse bestehend aus den Außengehäusehälften 25, 26 axial verschiebbar gelagert ist.

Fig.1

Detail X

Rank Xerox (UK) Business Services

Die Erfindung bezieht sich auf ein Ausgleichsgetriebe nach dem Oberbegriff des Anspruchs 1.

Die DE-PS 22 35 107 zeigt den Aufbau eines Sperrdifferentials, bei dem die Ausgleichsräder auf einem Achszapfen gelagert sind, der mit einer Nockenfläche versehen in einem das Ausgleichsgetriebe umschließenden Träger eingesetzt ist. Zwei Druckringe, eingesetzt zwischen dem Ausgleichsgetriebe und dem Träger, stehen in Wirkverbindung zur Nockenfläche des Achszapfens. Bei auftretender Relativdrehung, hervorgerufen durch eine Drehmomentdifferenz zwischen den beiden Abtriebswellen verschieben sich die Druckringe in axialer Richtung, mit der Folge einer Zahnspielveränderung. Durch die Verschiebung wird eine Sperrkupplung beaufschlagt zur Angleichung der Momente auf beiden Abtriebswellen.

Die bekannte Lösung zeigt nachteilig infolge der Druckringverschiebung einen sich damit verändernden Zahneingriff der Kegelräder des Ausgleichsgetriebes mit der Folge einer Verschleißerhöhung. Somit eignet sich die bekannte Konstruktion nur für eine begrenzte Sperrung des Ausgleichsgetriebes.

Der Erfindung liegt die Aufgabe zugrunde, ein kompakt bauendes selbstsperrendes Ausgleichsgetriebe darzustellen, mit dem eine Vollsperrung erreichbar ist unabhängig von der Häufigkeit der Betätigung, und der Sperrwert über das Abtriebsmoment der Abtriebswellen regelbar ist, wobei das Eingriffsspiel zwischen den Kegelrädern des Ausgleichsgetriebe in jeder Betriebsart unverändert bleibt.

Erfindungsgemäß wird die Aufgabe durch die kennzeichnenden Merkmale des Anspruchs 1 gelöst.

Der erfindungsgemäße Aufbau des Ausgleichsgetriebes sieht vor, daß die gesamte Differentialeinheit unabhängig von der Betriebsart von einem starren Gehäuse umgeben und in einem Außengehäuse axial verschiebbar gelagert ist. Vorteilhaft verändert sich damit nicht der Zahneingriff und folglich das Zahnspiel bei einer Sperrung des Ausgleichsgetriebes. Der erfindungsgemäße Aufbau sieht dazu ein die Differentialeinheit umschließendes Differentialgehäuse vor, bestehend aus zwei Gehäusehälften, die starr miteinander verschraubt werden. Dieser Aufbau ermöglicht, daß die Differentialeinheit in Verbindung mit den Differentialgehäusehälften vormontiert werden kann und gemeinsam in das Außengehäuse des Ausgleichsgetriebes einsetzbar ist. Damit ergeben sich Kostenvorteile bei der Montage sowie im Schadensfall ein einfacher Austausch des betreffenden Schadteils. Die Differentialeinheit umschließt den Schnittpunkt zwischen den Abtriebswellen und dem senkrecht dazu angeordneten Sternbolzen. Dabei dient der Sternbolzen als Übertragungsglied für den Antrieb zwischen der Differentialeinheit und den Außengehäusehälften. Der Sternbolzen weist dazu auf der zentrisch angeordneten zylindrischen Nabe radiale Bolzen auf, deren freie Enden beidseitig abgeflacht sind und in Längsschlitzen, die im Außengehäuse eingebracht sind, geführt sind. Die Nabe erstreckt sich axial über den Durchmesser der einzelnen Bolzen und dient innenseitig zur Aufnahme der beidseitig je teilweise in die Nabe drehbar eingesetzten Abtriebskegelräder, wodurch diese eine Zentrierung erfahren.

Der Aufbau sieht vor, daß jeder einzelne zum Sternbolzen gehörige Bolzen zwischen den beiden Differentialgehäusen innerhalb einer Bohrung unverrückbar verspannt werden.

Die kompakte Bauart unterstreichend sind als Axiallager für die Kegelräder der Differentialeinheit Anlaufscheiben vorgesehen, die jeweils zwischen dem Kegelrad und dem Differentialgehäuse eingesetzt sind. Die Abtriebskegelräder sind auf der sich zugewandten Seite mit einem Ansatz versehen, der bis zu einer Anlaufscheibe reicht, die mittig in der Differentialeinheit zwischen den Abtriebskegelrädern eingesetzt ist, zur gegenseitigen Abstützung und Lagerung bei auftretenden Relativbewegungen zwischen beiden Abtriebskegelrädern.

Das erfindungsgemäße Ausgleichsgetriebe weist keine form- oder reibschlüssige Verbindung zu den Abtriebswellen auf, und es erfolgt daher bei auftretendem ungleichen Drehzahlen der Abtriebswellen, aber gleichem Abtriebsmoment keine Sperrung des Ausgleichsgetriebes. Der Aufbau sieht dazu vor, daß die Abtriebswelle jweils frei drehbar und axial verschiebbar in je ein Abtriebskegelrad eingeführt ist.

Als Sperrvorrichtung ist vorteilhaft eine Lamellenbremse vorgesehen, deren Scheiben wechselweise mit der Außengehäusehälfte und dem Übertragungsring verbunden sind. Die Betätigung der Lamellenbremse erfolgt unmittelbar durch eine Axialverschiebung des Differentialgehäuses, bei der das Gehäuse unmittelbar die aus mehreren Lamellen bestehende Bremse beaufschlagt, so daß keine zusätzlichen Betätigungsmechanismen erforderlich sind.

In einer Ausgestaltung der Erfindung ist vorgesehen, als Übertragungsglied für das Abtriebsmomentes von der Differentialeinheit auf die Auftriebswellen Übertragungsringe vorzusehen, die jeweils drehfest mit der Abtriebswelle verbunden sind und die über auf dem Außenumfang angeordnete Mitnehmer, z. B. eine Verzahnung, mit Teilen einer Sperrvorrichtung in Verbindung stehen. Auf der zur Differentialeinheit gerichteten Seite weist jeder Übertragungsring eine Ringnut auf, in die eine Rampe eingreift, die als umlaufender Ansatz am Abtriebskegelrad befestigt ist und stirnseitig eine Grobverzahnung besitzt, die in ein entsprechendes Verzahnungsprofil innerhalb der Ringnut im Übertragungsring eingreift.

Bei ungleichem Abtriebsmoment wird die Differentialeinheit durch die an den schrägen Rampen entstehenden Axialkräfte in Richtung der Abtriebswelle axial verschoben, wodurch die zwischen dem Außengehäuse und dem Übertragungsring angeordnete Sperrvorrichtung betätigt wird.

Der erfindungsgemäße Aufbau gestattet vorteilhaft die Anpassung des Sperrwertes vom Ausgleichsgetriebe an das über die Abtriebswellen übertragbare Abtriebsmoment. Weiter erlaubt der Aufbau eine in Grenzfällen erforderliche Vollsperrung des Ausgleichsgetriebes unabhängig von der Häufigkeit der Betätigung aufgrund der robusten Konstruktion und des vorteilhaften unveränderten Zahneingriffs aller Kegelräder der Differentialeinheit.

Weitere Merkmale der Erfindung ergeben sich aus der Figurenbeschreibung, die ausführlich das in der Zeichnung dargestellte Ausführungsbeispiel erläutert.

Es zeigt:

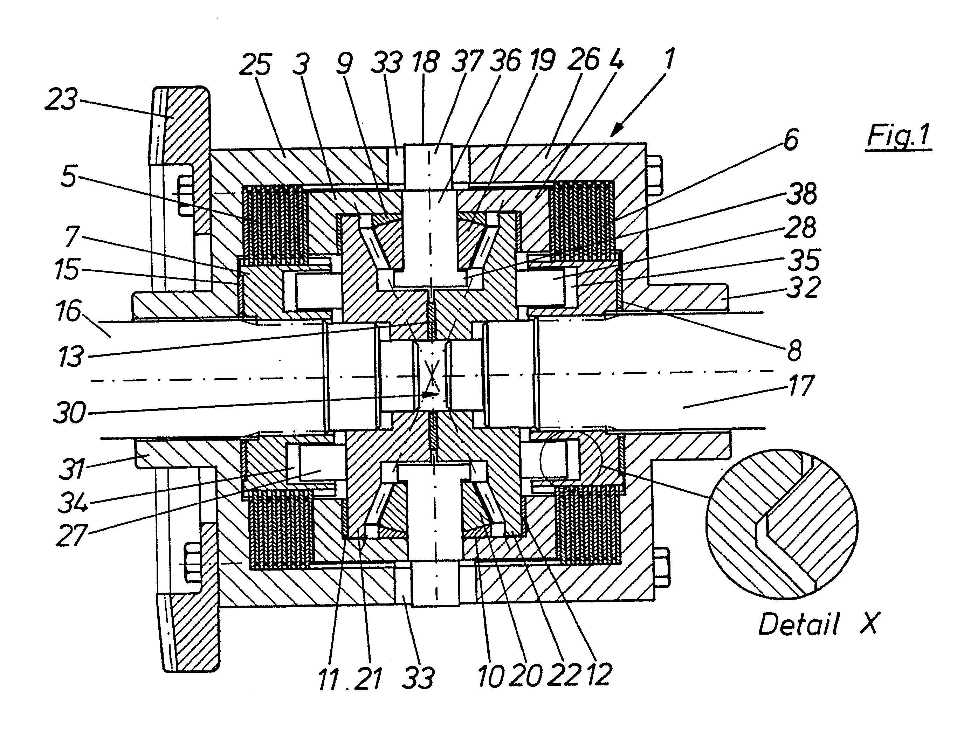

Fig.1:  In einer Schnittdarstellung den Aufbau des erfindungsgemäßen Ausgleichsgetriebes,

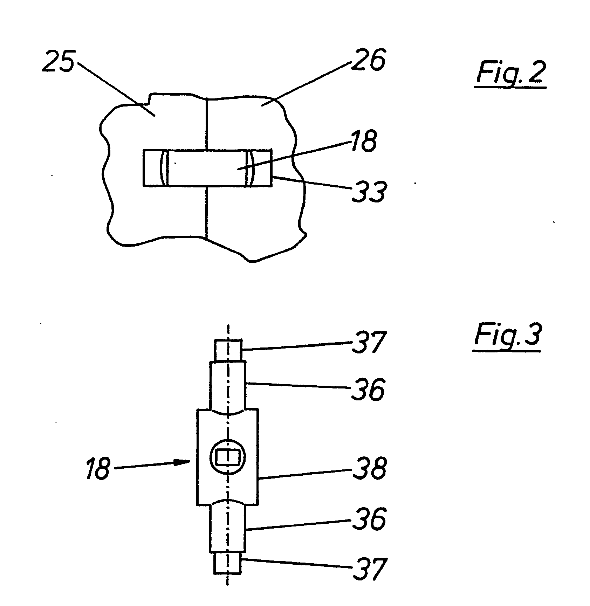

Fig.2:  als Ausschnitt die Darstellung des Sternbolzens im Außengehäuse gemäß Ansicht a der Fig.1,

Fig.3:  die Einzelteilzeichnung des Sternbolzens.

Der Aufbau des selbstsperrenden Ausgleichsgetriebes 1 zeigt ein am Tellerrad 23 befestigtes und aus den Außengehäusehälften 25, 26 bestehendes Gehäuse, das alle das Ausgleichsgetriebe einschließenden Bauteile umschließt. Die Mittelachse des Außengehäuses wird gebildet durch die Wellenenden der Abtriebswelle 16, 17, die seitlich jeweils in eine Außengehäusehälfte eingesetzt sind, wobei die Gehäusehälfte im Bereich der Abtriebswelle mit einer nabenartig ausgeführte Führung 31, 32 versehen ist, die beidseitig über die Außengehäusehälfte 25, 26 hinausragt. Das Selbstsperrdifferential 1 ist im Inneren versehen mit der Differentialeinheit 30, die im wesentlichen die paarweise gegenüberliegend angeordneten Kegelräder, die Ausgleichskegelräder 19, 20 sowie die Abtriebskegelräder 21, 22 umfassen. Die Kegelräder sind jeweils frei drehbar auf den Enden der Abtriebswelle 16, 17 bzw. dem Sternbolzen 18 angeordnet. Der Sternbolzen 18 stellt ein Bauteil dar, das ein zylindrisches Innenteil, die Nabe 38 aufweist, auf dem symmetrisch in gleicher Flucht radial auf dem Umfang verteilt eine Vielzahl von Achsen 36 angeordnet sind, deren freie Enden jeweils mit einer beidseitigen Abflachung (37), quer zur Längsachse versehen sind, die in je einen Längsschlitz 33 ragen, der in den Außengehäusehälften 25, 26 einbracht ist. Die Abtriebskegelräder 21, 22 sind zur Mitte der Differentialeinheit 30 mit einem Ansatz versehen entsprechend dem Innenmaß der mittigen Ausnehmung in der Nabe 38. Zur Erreichung einer schadlosen Relativbewegung zwischen beiden Abtriebskegelrädern 21, 22 dient eine zwischen beiden Kegelrädern eingesetzte Anlaufscheibe 13 als Axiallager. Der durch das Kegelgetriebe ausgelöste Axialschub wird aufgefangen durch die Anlaufscheiben 9, 10, 11, 12, welche zwischen den Differentialgehäusen 3, 4 und den einzelnen Kegelrädern eingesetzt sind. Weiter trägt auch dazu die Gestaltung des Differentialgehäuses 3, 4 bei, das aus zwei Hälften im eingebauten Zustand starr miteinander verbunden ist und den Kegeltrieb nahezu vollständig umschließt. Auf der zur Differentialeinheit 30 abgewandten Seite der Abtriebskegelräder 21, 22 ist in Form eines auf die Kegelräder aufgesetzten drehfesten Kreisringes eines Ansatzes 27, 28 angebracht, die in eine Ringnut 34, 35 -eingebracht in je einen Übertragungsring 7, 8- eingreift. Der Ansatz wie auch die Ringnut sind mit einer stirnseitigen Verzahnung versehen, siehe die vergrößerte Darstellung Detail x, die ineinandergreift. Die Übertragungsringe 7, 8 sind drehfest mit der Abtriebswelle 16, 17 verbunden und weisen auf ihrem Außenumfang eine Drehsicherung für Innenlamellen der Lamellenbremse 5, 6 auf. Die zur Lamellenbremse 5, 6 weiter gehörigen Außenlamellen sind drehfest mit der Außengehäusehälfte 25, 26 verbunden. Die Betätigung der Lamellenbremse 5, 6 erfolgt unmittelbar durch die Seitenflächen der Differentialgehäuse 3, 4, wenn die Differentialeinheit 30 axial verschoben wird. Als Axiallager zwischen den Übertragungsringen 7, 8 und den Außengehäusehälften 25, 26 ist jeweils eine Anlaufscheibe 14, 15 vorgesehen.

Funktionsbeschreibung:

Über die Außengehäusehälften 25, 26 und den Bolzen 36 des Sternbolzens 18 werden die Ausgleichskegelräder 19, 20 angetrieben und damit gleichfalls die Abtriebskegelräder 21, 22, welche frei drehbar auf den Abtriebswellen 16, 17 angeordnet sind. Über die Ansätze 27, 28 der Abtriebskegelräder 21, 22 und der Übertragungsringe 7, 8 wird das in das Ausgleichsgetriebe eingeleitete Drehmoment auf die Abtriebswellen übertragen. Bei gleichem Abtriebsmoment heben ich die an der Verzahnung entstehenden Axialkräfte auf, so daß die Differentialeinheit 30 in einer Mittellage verbleibt und vergleichbar mit einem herkömmlichen ungesperrten Differential funktioniert. Bei unterschiedlichen Abtriebsdrehmomenten -wenn bspw. das rechte Rad seine Bodenhaftigkeit verliert- wird das gesamte Differential, bedingt durch das größere Abtriebsmoment und die daraus resultierenden größeren Axialkräfte durch die sich spreizenden Bauteile (Übertragungsring 7 und Abtriebskegelrad 21) nach rechts verschoben und mit dem Differentialgehäuse 4 die Lamellenbremse 6 betätigt. Da die Lamellenbremse zwischen dem Außengehäuse und der Abtriebswelle wirkt, wobei eine formschlüssige Verbindung zwischen Abtriebswelle und Übertragungsring vorgesehen ist, wird das zuvor beispielhaft genannte ohne Bodenhaftung angetriebene rechte Rad so lange abgebremst, bis auf beiden Seiten wieder das gleiche Abtriebsmoment übertragen wird.

## Patentansprüche

1. Selbstsperrendes Ausgleichsgetriebe, insbesondere eingesetzt zwischen zwei Abtriebswellen einer angetriebenen Lenkachse eines Fahrzeugs, versehen mit einer Bremsvorrichtung, die in Abhängigkeit von Parametern selbsttätig den Ausgleich aufhebt, wobei das Ausgleichsgetriebe eine Differentialeinheit aus ineinandergreifenden Kegelrädern umfaßt, die von einem Differentialgehäuse umschlossen ist, das von zwei Differentialgehäusehälften gebildet wird, wobei das Differentialgehäuse und die Bremsvorrichtung in einem Gehäuse untergebracht sind und die Bremsvorrichtung auslösbar ist durch die Verschiebung zumindest einer Differentialgehäusehälfte im Gehäuse und das Gehäuse drehfest mit einem Antriebsrad verbunden ist, dadurch gekennzeichnet, daß die Differentialgehäusehälften (3, 4) starr miteinander verbunden sind und die Differentialeinheit (30) innerhalb des Gehäuses zur Auslösung der Bremsvorrichtung (1) axial gelagert ist.

2. Selbstsperrendes Ausgleichsgetriebe nach Anspruch 1, dadurch gekennzeichnet, daß die Differentialeinheit (30), vormontiert in das Gehäuse, bestehend aus den Außengehäusehälften (25, 26), einfügbar ist.

3. Selbstsperrendes Ausgleichsgetriebe nach Anspruch 1 und Anspruch 2, dadurch gekennzeichnet, daß die Differentialeinheit (30) zumindest zwei Ausgleichskegelräder (19, 20) und zwei Abtriebskegelräder (21, 22) umfaßt, die auf zwei sich kreuzende Bolzen, bzw. Wellenabschnitten der Abtriebswelle (16, 17) und einem Sternbolzen (18) angeordnet sind.

4. Selbstsperrendes Ausgleichsgetriebe nach einem der vorhergehenden Ansprüche, dadurch gekennzeichnet, daß der Sternbolzen (18) über den Außenumfang in mehrere in den Außengehäusehälften (25, 26) eingebrachte in Richtung der Abtriebswellenachse verlaufende Längsschlitze (33) eingreift.

5. Selbstsperrendes Ausgleichsgetriebe nach einem der vorhergehenden Ansprüche, dadurch gekennzeichnet, daß der Sternbolzen (18) zwischen den Differentialgehäusen (3, 4) starr gehalten ist und in Längsschlitze (33) axial verschiebbar ist.

6. Selbstsperrendes Ausgleichsgetriebe nach einem der vorhergehenden Ansprüche, dadurch gekennzeichnet, daß der Sternbolzen (18) mehrere symmetrisch radial auf dem Außenumfang einer zentrisch angeordneten Nabe (38) befindliche Bolzen (36) aufweist, deren Enden beidseitig quer zur Längsachse des Sternbolzens (18) eine Abflachung (37) aufweisen.

7. Selbstsperrendes Ausgleichsgetriebe nach einem der vorhergehenden Ansprüche, dadurch gekennzeichnet, daß alle die Differentialeinheit (30) bildenden Kegelräder auf der der Differentialeinheit (30) abgewandten Seite mit einer Anlaufscheibe (9, 10, 11, 12) in Verbindung stehen.

8. Selbstsperrendes Ausgleichsgetriebe nach einem der vorhergehenden Ansprüche, dadurch gekennzeichnet, daß eine Anlaufscheibe (13) im Inneren der Differentialeinheit (30) zwischen den Abtriebskegelrädern (21, 22) eingesetzt ist.

9. Selbstsperrendes Ausgleichsgetriebe nach einem der vorhergehenden Ansprüche, dadurch gekennzeichnet, daß die Abtriebswelle (16, 17) frei drehbar und axial verschiebbar mit dem Abtriebslagerrad (21, 22) verbunden ist.

10. Selbstsperrendes Ausgleichsgetriebe nach einem der vorhergehenden Ansprüche, dadurch gekennzeichnet, daß als Bremsvorrichtung eine Lamellenbremse (5, 6) vorgesehen ist.

11. Selbstsperrendes Ausgleichsgetriebe nach einem der vorhergehenden Ansprüche, dadurch gekennzeichnet, daß die Lamellenbremse (5, 6) unmittelbar vom Differentialgehäuse betätigbar ist.

12. Selbstsperrendes Ausgleichsgetriebe nach Anspruch 1, dadurch gekennzeichnet, daß je ein Übertragungsring (7, 8) drehfest mit je der Abtriebswelle (16, 17) verbunden ist und über den Außenumfang mit einer Anzahl von Bremslamellen der Bremsvorrichtung drehfest und axial verschiebbar in Wirkverbindung steht, und der Übertragungsring (7, 8) in Richtung Differentialeinheit (30) ein Zahnprofil aufweist.

13. Selbstsperrendes Ausgleichsgetriebe nach einem der vorhergehenden Ansprüche,
dadurch gekennzeichnet, daß jedem Abstriebskegelrad (21, 22) ein Ansatz (27, 28) zugeordnet ist, der in Richtung des Übertragungsringes (7, 8) zeigend am Abtriebskegelrad (21, 22) angeordnet ist und stirnseitig ein Zahnprofil aufweist.

**Fig.1**

Detail X

_Fig.2_

_Fig.3_

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y,P | EP-A-0 366 563   (STE PIERRE FERRY)<br>* das ganze Dokument *<br>– – – | 1-7,9-13 | F 16 H 1/44 |
| Y | FR-A-1 311 946   (DANA CORPORATION)<br>* das ganze Dokument *<br>– – – | 1-7,9-13 | |
| Y,P | EP-A-0 390 466   (TOCHIGI-FUJI SANGYO K.K.)<br>* Spalte 3, Zeile 32 - Spalte 4, Zeile 38; Figuren 1-3 *<br>– – – | 1,3-13 | |
| Y | FR-A-1 596 579   (DAIMLER-BENZ A.G.)<br>* Seite 2, Zeile 39 - Seite 3, Zeile 6; Figuren 1-2 *<br>– – – | 1,3-13 | |
| A | FR-A-2 604 504   (PONCET,PIERRE)<br>* Zusammenfassung; Figuren 1-3 *<br>– – – | 1,3,9-10 | |
| A | FR-A-2 380 158   (DAIMLER-BENZ A.G.)<br>* Seite 2, Zeile 31 - Seite 3, Zeile 29; Figuren 1-2 *<br>– – – – – | 1,3 | |

| RECHERCHIERTE SACHGEBIETE (Int. Cl.5) |
|---|
| F 16 H<br>B 60 K |

Der vorliegende Recherchenbericht wurde für alle Patentansprüche erstellt

| Recherchenort | Abschlußdatum der Recherche | Prüfer |
|---|---|---|
| Den Haag | 31 Mai 91 | VINGERHOETS A.J.L. |